Europäisches Patentamt

European Patent Office

Office européen des brevets

(11) Publication number: **0 508 466 B1**

## EUROPEAN PATENT SPECIFICATION

(45) Date of publication of patent specification: **30.08.95**

(51) Int. Cl.6: **F16F 9/50**, F16F 9/32, F16F 9/46

(21) Application number: **92106262.6**

(22) Date of filing: **10.04.92**

(54) **Hydraulic shock absorber.**

(30) Priority: **12.04.91 JP 106456/91**

(43) Date of publication of application:
**14.10.92 Bulletin 92/42**

(45) Publication of the grant of the patent:
**30.08.95 Bulletin 95/35**

(84) Designated Contracting States:
**DE FR GB IT SE**

(56) References cited:
EP-A- 0 200 446    EP-A- 0 341 597
WO-A-89/05929    DE-A- 4 016 807
DE-C- 4 022 098    FR-A- 2 635 364

Patent Abstracts of Japan vol. 14,
no.460(M-1032)(4403) 4 October 1990 & JP-
A-02 182 514(YAMAHA) 17 July 1990

(73) Proprietor: **ÖHLINS RACING AB
Box 722
S-194 27 Upplands Väsby (SE)**

Proprietor: **YAMAHA HATSUDOKI KABUSHIKI
KAISHA
2500 Shingai
Iwata-shi
Shizuoka-ken, 438 (JP)**

(72) Inventor: **Sönsteröd, Lars
Alingsäsvägen 19
510 40 Sandared (SE)**

(74) Representative: **Patentanwälte Grünecker,
Kinkeldey, Stockmair & Partner
Maximilianstrasse 58
D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a hydraulic shock absorber as indicated in the preamble portion of claim 1, the damping force of which is controlled by an exciting current of a linear solenoid.

It is preferable that the damping force of shock absorbers for automobiles, motor cycles or other vehicles can be changed freely according to the operating conditions of the vehicle. There have been proposed devices in which the working pressure of a switch valve for opening and closing a fluid passage extending through the piston of the hydraulic shock absorber is changed by means of a linear solenoid in response to the detected amount and frequency of vibrations, i.e. in response to the travel amounts and speeds of expansion and contraction movement of the shock absorber (see JP-A-2-85535 and JP-A-Hei 2-182514).

Generally such shock absorbers comprise a piston defining two main oil chambers in a cylinder, a switch valve provided in the piston and defining sub-oil chambers in the piston associated to the main oil chambers with an orifice interposed between the sub-oil chambers. Accordingly the damping force of the shock absorber is controlled by opening an oil passageway between the main oil chambers through the switch valve when the pressure in the one sub-oil chamber exceeds a pressure preset with a linear solenoid while the oil pressure in the high pressure side main oil chamber is supplied to the other sub-oil chamber.

In the conventional embodiment, however, not only the main oil passage and the pilot passage are formed in a single piston body but also a plurality of valves which renders the structure of the piston complicated and the efficiency of assembly and manufacturing low. Moreover, it is impossible to test the different components of the valve arrangement in a preassembled condition, therefore, adjustment and testing conditions are inconvenient.

In view of the switch valve for establishing or blocking fluid connection between the two main oil chambers defined by the piston in the cylinder, frequently a spool valve is adopted which requires that a valve port and a spool land be brought in an overlapping condition at the time of closing the main oil passage which leads to a relatively large delay in the response characteristic of the spool valve. Measures taken to improve the response characteristic and to accelerate the shift of the valve spool have led to an increase in the amount of working oil leakage and reduced reliability.

Although it has already been deliberated to replace the spool valve by a poppet valve which causes a plate-shaped valve body to abut against a valve seat or to move away therefrom, difficulties have arisen in that the pressure reduces when the pressurised oil flows through a narrowed gap between the poppet valve and a radially disposed valve seat, rendering the valve body to be sucked to the valve seat and to vibrate.

In view of the afore-noted difficulties it is a main objective of the present invention to provide a hydraulic shock absorber as indicated in the introductory portion of the description which can easily be assembled to improve the manufacturing efficiency, enabling the different components, specifically of the valve arrangement, to be subject to testing and adjusting independently from another one to check the appropriate function before said components are assembled to a complete shock absorber unit, specifically prior to completing the piston of the shock absorber.

According to the present invention the afore-indicated objective is performed through a hydraulic shock absorber as indicated above having a hollow piston which defines a cup-shaped piston housing with an accommating space therein for successively receiving therein a preassembled pilot valve unit and a preassembled control valve unit, the latter defining the main oil passage, wherein the control valve of the control valve unit is exposed to one of the main oil chambers through the open end of the piston housing.

According to a preferred embodiment of the present invention the hydraulic shock absorber comprises an integral pilot valve unit having a pilot valve housing accommodating a pilot valve, a first pilot valve passage, including a check valve means, and a solenoid for controlling said pilot valve. The main oil passage control valve unit integrally comprises a main oil passage housing defining the main oil passage and at least another, second pilot valve passage. Moreover, the main oil passage housing supports the main oil passage control valve which, in turn, defines the sub-oil chamber establishing fluid communication between the main oil passage control valve unit and the pilot valve unit respectively.

In a preferred embodiment of the present invention the shock absorber which shows a smooth opening and closing characteristic of the main oil passage between an upper and lower main oil chamber disposed at the opposite sides of a piston sealing means, leading to a quick response characteristic of the valve means, avoiding any vibration of said valve means controlling the main oil passage and operating with high reliability.

According to yet another preferred embodiment of the present invention the main oil passage control valve is embodied through a spring biased poppet valve having a sleeve section which is slidably accommodated in a poppet valve insulation chamber and partially defines said sub-oil chamber, a poppet valve section comprising a tapered flow guiding section exposed to the adjacent main oil chamber and defining said second pilot oil passage to connect said main oil chamber to the sub-oil chamber, and a valve plate section which is integral with the sleeve section for controlling a valve opening through an axial movement of the sleeve section, said valve opening being defined by a lower rim portion of the main oil passage housing forming a valve seat for claws radially projecting from the circumference of the valve plate section of the poppet valve to abut against a step of the lower rim portion from above, whereas the valve opening established fluid communication between the associated main oil chamber and the main oil passage in response to the axial position of the poppet valve.

Further preferred embodiments of the present invention are laid down in the further sub-claims. According to the main aspect of the present invention the pilot valve unit wherein the pilot valve housing accommodates the pilot valve, the first pilot passage and the linear solenoid are assembled, is installed to form an independent integral component. The same applies to the control valve unit comprising the main oil passage control valve in a respective main oil passage housing which, moreover, also defines the main oil passage between the two main oil chambers, said control valve unit also defines an independent integral component. Both said independent components are stacked successively in an axial direction in the piston housing through an open end of the piston and secured. The manufacturing efficiency is improved as the assembly is easy and each component can be manufactured separately. Also, components for the pilot valve housing and the main oil passage can be assembled and tested independently in advance. For instance, tests can be made with a conventional component for the one system (pilot or control valves) while the other component is to be tested. In this way the adjustment and calibration of the system is facilitated.

Moreover, according to the other preferred embodiment of the present invention wherein the hydraulic shock absorber comprises a sub-oil chamber into which the fluid pressure of the high pressure side main oil chamber is introduced and a pilot valve is provided, which opens when the pressure in the sub-oil chamber exceeds a value preset by means of a linear solenoid to release working oil from the sub-oil chamber to the other low pressure main oil chamber by way of a pilot passage and wherein a control valve for opening and closing the main oil passage between both main oil chambers in response to the increase and decrease in the differential pressure between the sub-oil chamber and the high pressure side main oil chamber is provided. An improved response characteristic is acquired by means of designing said control valve to form a poppet valve with a sleeve section facing the sub-oil chamber at the one end of the valve plates' section of the poppet valve located at the opposite end of said sleeve section for opening and closing the valve opening communicating the associated main oil chamber to the main oil passage. Moreover, it is preferred that the valve plate section has approximately the same diameter as that of the valve opening, so that valve plate section being provided with a plurality of projecting claws on the circumference thereof, which engage with or disengage from a step portion of a rim of the housing which defines the valve opening and forms a valve seat against which the projecting claws abut by means of an axial displacement of the poppet valve. Accordingly, as the control valve is designed as a poppet valve for opening and closing the main oil passage and the diameter of the valve plate section of the poppet valve is made approximately on the same diameter as that of the valve opening to be controlled by said valve plate section of the poppet valve and there is an axially abutting engagement or disengagement of the valve plate section with the step portion of the lower rim of the control valve housing, defining the valve opening. When the poppet valve is opened or closed there is substantially no delay in the operation of the poppet valve and a quick response is obtained. As there is substantially no overlapping between the valve plate section and the associated valve seat (i.e. step portion of the rim defining the valve opening) in the radial direction vibration of the poppet valve due to a throttling effect of a narrow oil flow gap is less likely to occur and, therefore, a more reliable operation of the shock absorber is obtained.

In the following, the present invention is explained in greater detail by means of a preferred embodiment thereof in conjunction with the accompanying drawings, wherein:

Fig. 1 is a schematic exploded view of the independent integral pilot valve unit and control valve unit adapted to be inserted into the piston housing of the damping piston of the shock absorber.

Fig. 2 is a longitudinal cross-section of a main part of an embodiment of the shock absorber of the present invention,

Fig. 3 is a cross-sectional along the line II-II of Fig. 1,

Fig. 4 is a schematic sketch of the main components of the valve arrangement disposed within the piston of the shock absorber substantially in line with Fig. 1 showing the oil flow during a downward compression stroke, and

Fig. 5 is a sketch similar to Fig. 3 showing the oil flow during an expansion stroke.

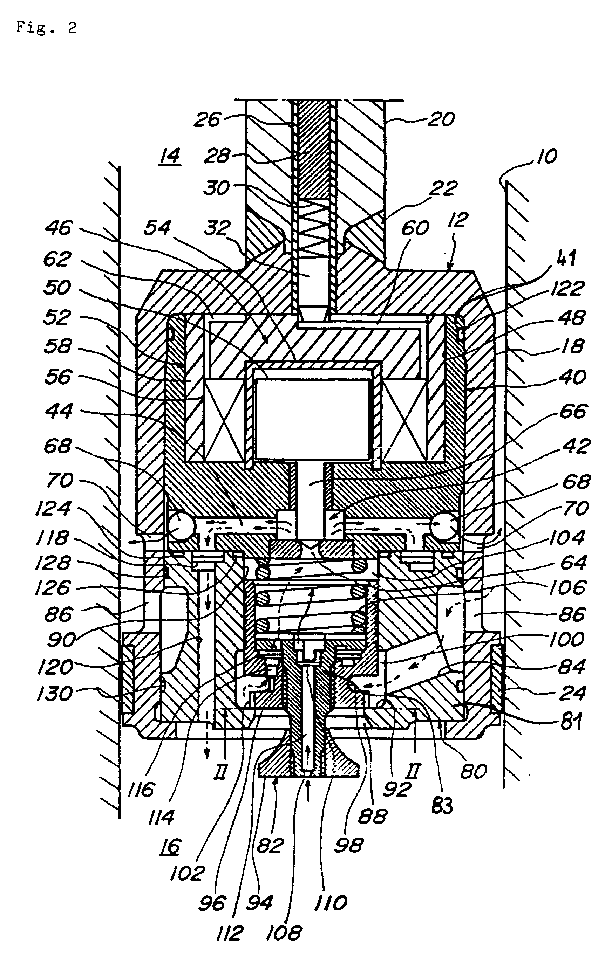

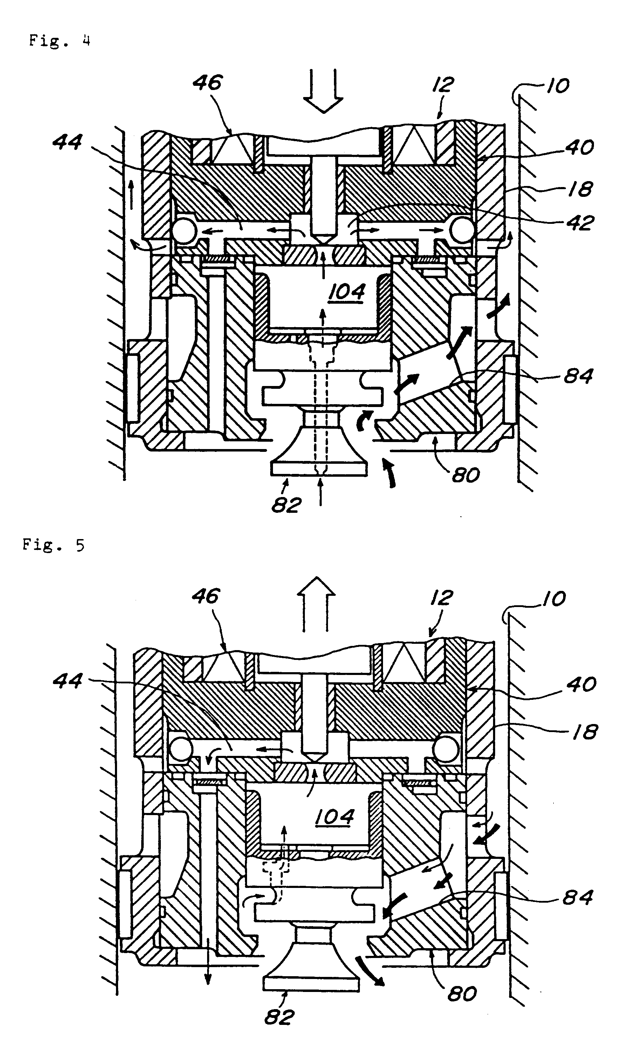

Fig. 2 shows a cylinder 10 of the shock absorber receiving a piston 12 to define two main oil chambers 14 and 16 within the cylinder 10. The piston 12 comprises a cylindrical piston housing 18, the one end of which is open (see Fig. 5). The other closed end of the piston housing 18 is welded with a bead 22 to a piston rod 20. A sealing ring 24 is installed over the outer circumference of the cylinder housing 18 adjacent to the open end of the piston 12. Since the piston housing 18 is welded to the piston rod 20 this way, deviations of the axial alignment between these two components are reduced to improve the assembling accuracy.

An electrode rod 28 is inserted in a central hole of the piston rod 20 via an insulator 26 while an electrode 32 is inserted from the inner side of the piston housing via a coil spring 30.

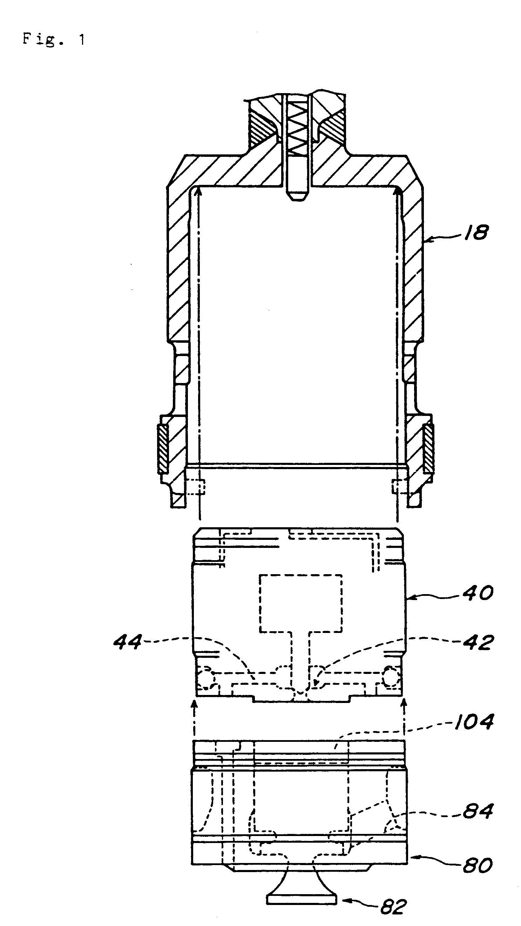

As shown in Fig. 1, the piston housing 18 accommodates in an axially stacked manner two integral independent main components of the shock absorber system, namely a pilot valve unit 40 and a control valve unit 80. The preassembled pilot valve unit 40 is an integral unit comprising a pilot valve housing 41, a pilot valve 42, a first pilot passage 44 and a linear solenoid 46. A solenoid insulation room 48 is opened on the outer side of the housing 41 or on the side facing the inner bottom surface of the piston housing 18. A plunger 50 and a coil assembly 52 are successively accommodated in the solenoid insulation room 48. The coil assembly 52 comprises a plunger case 55 made of a non-magnetic material, such as stainless steel, surrounding a plunger 50, and a coil 56 surrounding the case 54 both moulded with synthetic resin 58 with electrodes 60 and 62 appearing on the top of the assembly. The pilot valve 42 is provided with a valve hole 64 opening to the bottom of the housing 41 and with a valve body 66 for opening and closing the valve hole 64. The valve body 66 is an integral part of said plunger 50.

The first pilot passage 44 is located in the lower part of the pilot housing 41 and extends radially from the pilot valve 42 to open to the outer circumference of the pilot valve housing 41. Said openings are provided with check valve balls 68 allowing the working oil to flow radially outwardly not only to the respective upper main oil flow chamber 14 but blocking an oil flow radially inwardly from the upper main oil chamber 14 radially inwardly. The first pilot passage 44 branches downward at a position radially inside of the check valve 68 to open to the bottom surface of the pilot valve housing 41 and to connect to the third pilot passage 120 (as described later on) extending through a main oil passage housing section 81 of the main oil passage control valve unit 80.

The pilot valve unit 40 constituted this way, as a single integral component, is inserted from the bottom opening of the piston housing as shown in Fig. 1. Upon assembling the pilot valve unit 40 the electrode 60 in the centre of the solenoid 46 pushes the electrode 32 projecting from the inner bottom surface of the piston housing 18. The other electrode 62 contacts the inner bottom sufrace of the piston housing 18. Therefore, a exciting current of the solenoid 46 flows through the electrode rod 26 and the piston rod 20. The piston housing 18 is also provided with openings 70 which connect the check valves 68 to the upper main oil chamber 14 under the condition of the pilot valve unit 40 being accommodated in the piston housing 18 (see Fig. 2).

A main oil passage control valve unit 80 forming the control valve unit similarly is constituted as an integral unit assembled into the piston housing 18 after the pilot valve unit 40 is inserted (see Fig. 1). Said main oil passage control valve unit 80 integrally comprises a main oil pasage housing 81 including a poppet valve 82 with a poppet valve section 83, and a main oil passage 84. The main oil passage 84 connects openings 86 provided on the side of the piston housing 18 to an opening 88 provided at the bottom surface of the main oil passage housing 81. The valve opening 88 connects to a poppet valve insulation chamber 90 opening at the top surface of the main oil passage housing 81. The inner diameter of the insulation chamber 90 is made larger than that of the valve opening 88. A horizontal step section 92 is formed on the rim portion of the housing 81 defining the valve opening 88 and facing to the insulation chamber 90.

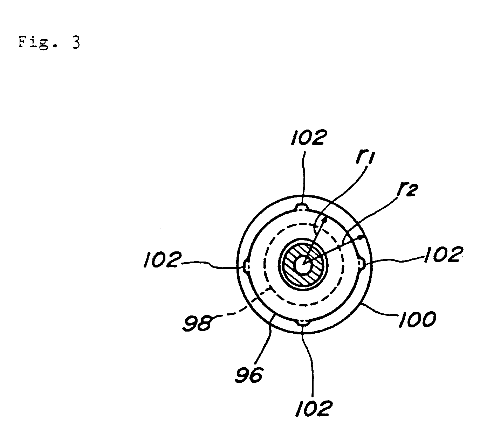

In order to control the main oil passage 84 which establishes or blocks the connection between the two main oil chambers 14 and 16 in response to the axial position of the poppet valve 82, more specifically a sleeve section 100 thereof (as explained below), the poppet valve 82 is accommodated in the poppet valve insulation chamber 19 from above and comprises a tapered flow guiding section 94 to provide a laminar oil flow, projecting downward from a poppet valve section 83 to be exposed to the lower main oil chamber 14. Moreover, the poppet valve 82 comprises a valve plate section 96 for engaging the step portion 92 defining the valve opening 88, an annular groove 98 facing the inside end of the main oil passage 84 and a sleeve section 100 integrally comprising the valve plate section 96 and the afore-indicated annular groove 98, said sleeve section 100 is adapted to axially slide in the insulation chamber 90 to provide the valve function opening or blocking the main oil passage 84. As shown in Figs. 2 and 3, the radius r1 is approximately equal to that of the sleeve section 100 with radially projecting claws 102 provided at four circumferentially spaced positions. The valve opening 88 is closed by the contact of these claws 102 with the step portion 92. Here the radius r2 of the sleeve section 100 is larger than the radius r1 of the valve opening 88. The relationship between the area $S_1$ - $(=\pi r1^2)$ $\pi(r3^2 - r1^2)^2 = 2\pi r1^2$ for receiving the upward pressure on the valve plate section 100, and the area $S_2$ $(=\pi(r2^2 - r1^2))$ for receiving the upward pressure on the step portion 92 is set for instance as $S_1 = 2S_2$.

A recess in the sleeve section 100 opens to the insulation chamber 90 and forms a sub-oil chamber 104 facing to the pilot valve 42. A coil spring 106 is accommodated in the recess to exert a prebiasing force in the direction of closing the opening 8 with the poppet valve 82, thus urging the poppet valve 82 in a downward rest position blocking the main oil passage 84.

The poppet valve 82 is provided with another, second pilot passage 112 for supplying working oil from the lower main oil chamber 16 to the sub-oil chamber 104 by way of an orifice 108 (see Fig. 2) provided in the tapered guide section 94 and a check valve 110. The annular groove 98 at the circumferential area of the sleeve section 100 is provided with an orifice 114 for introducing working oil from the upper main oil chamber 14 to the sub-oil chamber 104 by way of the main oil passage 84 and a check valve 116 associated to the orifice 114.

As already mentioned above, the main oil passage housing 81 is provided with a third pilot passage 120 by-passing the poppet valve 82 and connected by way of the check valve 118 to the first pilot passage 44 of the pilot valve 42 to introduce working fluid from the first pilot passage 44 to the lower main oil chamber 16.

In order to assemble the piston 12 parts are installed respectively in the pilot valve housing 41 and the main oil passage housing 81 as preliminary assemblies and then these preassembled units are installed in succession into the piston housing 18 as shown in Fig. 1. The open rim of the piston housing 18 is crimped in order to secure the two units 40, 80. Sealing rings 122, 124, 126, 128 and 130 such as O-rings are inserted at appropriate positions.

In the following the operation of the shock absorber according to this embodiment is explained. During a compression stroke (bounding) as shown in Fig. 4, the piston 12 is pushed downward as indicated by the arrow shown in said figure. As a result the pressure in the lower main oil chamber 16 rises and the pressurised oil flows through the orifice 108, the second pilot passage 112 and the check valve 110 to the sub-oil chamber 104 causing a pressure increase in said sub-oil chamber 104. On the other hand, as the valve body 66 of the pilot valve 44 closes the valve hole 64 with a force predetermined through an exciting current in the linear solenoid 46, the pilot valve 42 opens when the pressure in the sub-oil chamber 104 exceeds the predetermined value as preset by the pilot valve 42 and the working oil escapes from the first pilot passage 44 through the check valve 68 to the upper main oil chamber. As a result the pressure in the sub-oil chamber 104 is reduced and the poppet valve 82 is pushed up through the higher oil pressure within the lower main oil chamber 16 leading the valve plate section 96 to move away from the step portion 92 of the valve opening 88. In other words, the main oil passage 84 opens and working oil flows from the lower main chamber 16 to the upper main oil chamber 14. When the differential pressure between both main chambers 14 and 16 drops below a predetermined value, the pilot valve 42 is pushed back by means of the prebiasing spring force of the coil spring 106 to close the main oil passage 84 again. While repeating the afore-described actions the piston 12 moves downwards.

During a rebounding stroke, i.e. an expanding upward movement of the shock absorber as shown in Fig. 5, the pressure in the upper main oil chamber 14 rises as the piston 12 is pulled up as indicatd in that figure and the pressure is drained through the main oil passage 84 via the annular groove 98 of the poppet valve 82 to induce oil flow from the annular groove 98 through the orifice 114 and the check valve 116 to the sub-oil chamber 104. When the pressure in the sub-oil chamber 104 exceeds the value preset by means of the linear solenoid 46, the pilot valve 42 opens and working oil escapes through the pilot 44, check valve 118 and the third pilot passage 120 to the lower main oil chamber 16. As a result thereof, the pressure in the sub-oil chamber 104 drops and the poppet valve 82 moves upwards to open the main oil passage 84. Consequently, working oil flows from the upper main oil chamber 14 to the lower main oil chamber 16 and, when the differential pressure between both main oil chambers 14, 16 drops below a specific value, the main oil passage 84 is closed through the poppet valve 82. While repeating the afore-described actions the piston 12 moves upwardly.

As the diameter r1 of the valve plate section 96 of the poppet valve 82 is set approximately equal with that of the valve opening 88 and the poppet valve 82 is closed by the contact of the claws 102 of the valve plate section 96 with the step portion 92, substantially no overlapping between the valve plate section 96 and the valve opening 88 in the radial direction exists. As a result thereof, the poppet valve 82 does not vibrate and the operation is smooth. In other words, as there is almost no radial overlapping between the valve plate section 96 and the valve opening 88, a force attracting the valve plate section 96 towards the step portion 92 is weakened even if the pressure is lowered when working oil flows through a narrowed gap between the two components.

As already described, since the area $S_1$ for receiving the upward pressure on the valve plate section 96 of the poppet valve 82 defined by the diameter of the valve opening 88 and the area $S_2$ for receiving the upward pressure on the annular groove 98 are said to be in the relationship of $S_1 = 2S_2$, the pressure at which the poppet valve 82 begins to open during an expansion stroke is twice that of the pressure during a compression stroke if the exciting current in the linear solenoid is assumed to be unchanged in both extenstion and compression strokes or sides. Therefore, the damping force during an expansion stroke can be set twice of that during a compression stroke.

Through the present invention defining the pilot valve unit 40 and the control valve unit 80 as independent integral units which are accommodated one behind the other along the axial direction of a damping piston, the manufacturing efficiency is improved and singular testing of the components of the shock absorber is facilitated. Thus, precise adjustments of all components are improved.

Moreover, as the selection of a poppet valve effective in the axial direction to control a main oil passage, an improved response characteristic of the whole system is acquired and vibrations of the poppet valve, due to a throttling effect, are avoided or at least minimised.

## Claims

1. Hydraulic shock absorber comprising a cylinder (10) and a hollow piston (12) slidably received therein to define two main oil chambers (14, 16) in said cylinder (10), a control valve (82) provided in the piston (12) for controlling a main oil passage (84) connecting said two main oil chambers (14, 16), a pilot valve (42) disposed in series to the control valve (82) and activating same in response to a differential pressure between an oil pressure prevailing in a valve controlled sub-oil chamber (104) and one of the main oil chambers (14, 16) wherein the oil pressure exceeds that of the respective other main oil chamber (16, 14),

   **characterised in that**
   the hollow piston (12) defines a cup-shaped piston housing (18) with an accommodating space for successively receiving therein a preassembled pilot valve unit (40) and a preassembled control valve unit (80) defining the main oil passage (84), wherein the control valve (82) of the control valve unit (80) is exposed to one of the main oil chambers (16) through the open end of the piston housing (18).

2. Hydraulic shock absorber as claimed in claim 1,
   **characterised in that**
   the pilot valve unit (40) integrally comprises a pilot valve housing (41) accommodating a pilot valve (42), a first pilot valve passage (44) wherein a check valve means (68) is accommodated, and a solenoid (56) for controlling said pilot valve (42).

3. Hydraulic shock absorber as claimed in claims 1 or 2,
   **characterised in that**
   said control valve unit (80) integrally comprises a main oil passage housing (81) defining the main oil passage (84) and at least another, second pilot valve passage (112), said main oil passage housing (81) supporting the main oil passage control valve (82) which, in turn, partially defines the sub-oil chamber (104) for communicating the main oil passage control valve (82) to the pilot valve (42).

4. Hydraulic shock absorber as claimed in claim 3,
   **characterised in that**
   said main oil passage control valve comprises a spring biased poppet valve (82) having a sleeve section (100) facing and partially defining said sub-oil chamber (104), a poppet valve section (83) defining said second pilot oil passage (112) which connects the adjacent main oil chamber (16) to the sub-oil chamber (104), and a valve plate section (96) integral with the sleeve section (100) for controlling a valve opening defined by a lower rim portion (92) of the main oil passage (81), said valve opening (88) establishing or blocking connection between the associated main oil chamber (16) and the main oil passage (84) in response to the position of the poppet valve (82).

5. Hydraulic shock absorber as claimed in claim 4,
   **characterised in that**
   said valve plate section (96) is of about the same diameter as the valve opening (88) but comprises a plurality of claws (102) which radially project from the circumference of the valve plate section (96) to abut against a step of the lower rim portion (92) of the main oil passage housing (81) from above.

6. Hydraulic shock absorber as claimed in claims 2 or 5, **characterised in that** said poppet valve (82) defines an orifice (114) between the main oil passage (84) and the sub-oil chamber (104).

7. Hydraulic shock absorber as claimed in at least one of the preceding claims 2 to 6, **characterised in that** said main oil passage housing (81) comprises a third pilot passage (120) in parallel to the second pilot passage (112) to connect the first pilot passage (44) of the pilot valve unit (40) to the main oil chamber (16) adjacent to the poppet valve (82).

8. Hydraulic shock absorber as claimed in at least one of the preceding claims 2 to 7, **characterised in that** the check valve controlling the feed communication between the first pilot passage (44) and the main oil chamber (14) remote from the poppet valve (82) is the ball valve type.

9. Hydraulic shock absorber as claimed in claim 4, **characterised in that** said sleeve section (96) of the poppet valve (82) is slidably accommodated in a poppet valve insulation chamber (90) and comprises an annular groove (98) facing to the inside of the main oil passage (84), whereas said poppet valve section (83) comprises a tapered flow guiding section (94) exposed to the main oil chamber (16) adjacent to the poppet valve (82).

10. Hydraulic shock absorber as claimed in at least one of the preceding claims 1 to 9, **characterised in that** piston housing (18) comprises a circumferential seal ring close to the open end of the cylinder housing (18) which is in sealing contact with the inner wall of the cylinder (10).

**Patentansprüche**

1. Hydraulischer Stoßdämpfer mit einem Zylinder (10) und einem hohlen Kolben (12), der gleitbar in diesem aufgenommen ist, um zwei Hauptölkammern (14, 16) in dem Zylinder (10) zu bilden, einem Steuerventil (82), das in dem Kolben (12) vorgesehen ist, um einen Hauptölkanal (84) zu steuern, der die zwei Hauptölkammern (14, 16) verbindet, einem Vorsteuerventil (42), das in Reihe mit dem Steuerventil (82) angeordnet ist und dieses in Abhängigkeit von einer Druckdifferenz zwischen einem Öldruck steuert, der in einer ventilgesteuerten Unter-Ölkammer (104) und einer der Hauptölkammern (14, 16) herrscht, in der der Öldruck denjenigen in der jeweiligen anderen Hauptölkammer (16, 14) übersteigt, **dadurch gekennzeichnet,** daß der hohle Kolben (12) ein tassenförmiges Kolbengehäuse (18) bildet, mit einem Aufnahmeraum, um in diesem abfolgend eine vormontierte Vorsteuerventileinheit (40) und eine vormontierte Steuerventileinheit (80), die den Hauptölkanal (84) bildet, aufzunehmen, wobei das Steuerventil (82) der Steuerventileinheit (80) einer der Hauptölkammern (16) durch das offene Ende des Kolbengehäuses (18) ausgesetzt ist.

2. Hydraulischer stoßdämpfer nach Anspruch 1, **dadurch gekennzeichnet,** daß die Vorsteuerventilerinheit (14) einstückig ein Vorsteuerventilgehäuse (41), das ein Vorsteuerventil (45) aufnimmt, einen ersten Vorsteuerventilkanal (44), in dem eine Rückschlagventileinrichtung (68) aufgenommen ist, und eine Magnetspule (56) zur Steuerung des Vorsteuerventiles (42) aufweist.

3. Hydraulischer Stoßdämpfer nach Anspruch 1 oder 2, **dadurch gekennzeichnet,** daß die Steuerventileinheit (80) einstückig aufweist ein Hauptölkanalgehäuse (81), das den Hauptölkanal (84) und zumindest einen weiteren, zweiten Vorsteuerventilkanal (112) bildet, wobei das Hauptölkanalgehäuse (81) das Hauptölkanal-Steuerventil (82) lagert, das seinerseits teilweise die Unter-Ölkammer 104) begrenzt, zur Verbindung des Hauptölkanal-Steuerventiles (82) mit dem Vorsteuerventil (42).

4. Hydraulischer Stoßdämpfer nach Anspruch 3**, dadurch gekennzeichnet,** daß das Hauptölkanal-Steuerventil ein durch eine Feder vorgespanntes Ablaßventil (82) aufweist, das einen Hülsenabschnitt (100) besitzt, der der Unter-Ölkammer (104) zugewandt ist und diese teilweise bildet, einen Ablaßventilabschnitt (83), der einen zweiten Vorsteuerventilkanal (112) bildet, der die benachbarte Hauptölkammer (16) mit der Unter-Ölkammer (104) verbindet, und einem Ventilplattenabschnitt (96) einstükkig mit dem Hülsenabschnitt (100), zur Steuerung einer Ventilöffnung, die durch einen unteren Randabschnitt (92) des Hauptölkanales (81) gebildet ist, wobei die Ventilöffnung (88) eine Verbindung zwischen der zugehörigen Hauptölkammer (16) und dem Hauptölkanal (84) in Abhängigkeit von der Position des Ablaßventiles (82) herstellt oder unterbricht.

5. Hydraulischer Stoßdämpfer nach Anspruch 4, **dadurch gekennzeichnet, daß** der Ventilplattenabschnitt (96) von ungefähr demselben Durchmesser ist, wie die Ventilöffnung (88), jedoch eine Mehrzahl von Klauen (102) aufweist, die vom Umfang des Ventilplattenabschnittes (96) radial vorspringen, um gegen eine Stufe des unteren Randabschnittes (92) eines Hauptölkanalgehäuses (81) von oben anzuliegen.

6. Hydraulischer Stoßdämpfer nach Anspruch 2 oder 5, **dadurch gekennzeichnet, daß** das Ablaßventil (82) eine Drosselstelle (114) zwischen dem Hauptölkanal (84) und der Unter-Ölkammer (104) bildet.

7. Hydraulischer Stoßdämpfer nach zumindest einem der vorhergehenden Ansprüche 2 bis 6, **dadurch gekennzeichnet, daß** das Hauptölkanalgehäuse (81) einen dritten Vorsteuerkanal (120) parallel zu dem zweiten Vorsteuerkanal (112) aufweist, um den ersten Vorsternerkanal (44) der Vorsteuerventileinheit (44) der Vorsteuerventileinheit (40) mit der Hauptölkammer (16) benachbart zu dem Ablaßventil (82) zu verbinden.

8. Hydraulischer Stoßdämpfer nach zumindest einem der vorhergehenden Ansprüche 2 bis 7, **dadurch gekennzeichnet, daß** das Rückschlagventil, das die Zuführungsverbindung zwischen dem ersten Vorsteuerkanal (44) und der Hauptölkammer (14) entfernt von dem Ablaßventil (82) steuert, vom Kugelventiltyp ist.

9. Hydraulischer Stoßdämpfer nach Anspruch 4, **dadurch gekennzeichnet, daß** der Hülsenabschnitt (96) des Ablaßventiles (82) gleitbar in einer Ablaßventil-Isolierkammer (90) aufgenommen ist und eine Ringnut (98) aufweist, die dem Inneren des Hauptölkanales (84) zugewandt ist, während der Ablaßventilabschnitt (83) einen konischen Strömungsführungsabschnitt (94) aufweist, der der Hauptölkammer (16) benachbart zu dem Ablaßventil (82) ausgesetzt ist.

10. Hydraulischer Stoßdämper nach zumindest einem der vorhergehenden Ansprüche 1 bis 9, **dadurch gekennzeichnet, daß** das Kolbengehäuse (18) nahe des offenen Endes des Zylindergehäuses (18) einen Umfangsdichtring aufweist, der in Dichtkontakt mit der Innenwandung des Zylinders (10) ist.

**Revendications**

1. Amortisseur de chocs hydraulique comprenant un cylindre (10) et un piston creux (12) monté glissant à l'intérieur de manière à définir deux chambres à huile principales (14, 16) dans ledit cylindre (10), une soupape de régulation (82) disposée dans le piston (12) pour la régulation d'un passage d'huile principal (84) connectant lesdites deux chambres à huile principales (14, 16), une soupape pilote (42) disposée en série par rapport à la soupape de régulation (82) et activant cette dernière en réponse à une pression différentielle entre une pression d'huile régnant dans une souschambre à huile (104) régulée par soupape et l'une des chambres à huile principales (14, 16) dans laquelle la pression d'huile est supérieure à celle de l'autre chambre à huile principale (16, 14), caractérisé en ce que le piston creux (12) définit un carter de piston en forme de coupelle (18) présentant un espace pouvant recevoir successivement un ensemble formant soupape pilote préassemblé (40) et un ensemble formant soupape de régulation préassemblé (80) définissant le passage d'huile principal (84), dans lequel la soupape de régulation (82) de l'ensemble formant soupape de régulation (80) est exposée à l'une des chambres à huile principales (16) par l'extrémité ouverte du carter du piston (18).

2. Amortisseur de chocs hydraulique selon la revendication 1, caractérisé en ce que l'ensemble formant soupape pilote (40) comprend intégralement un carter de soupape pilote (41) recevant une soupape pilote (42), un premier passage de soupape pilote (44) dans lequel des moyens formant clapet antiretour (68) sont disposés, et un solénoïde commandant ladite soupape pilote (42).

3. Amortisseur de chocs hydraulique selon les revendications 1 ou 2, caractérisé en ce que ledit ensemble formant soupape de régulation (80) comprend intégralement un carter à passage d'huile principal (81) définissant le passage d'huile principal (84) et au moins un autre passage secondaire de soupape pilote (112), ledit carter à passage d'huile principal (81) supportant la soupape de régulation de passage d'huile principal (82) qui, à son tour, définit partiellement la sous-chambre à huile (104) pour la communication de la soupape de régulation de passage d'huile (82) à la soupape pilote (42).

4. Amortisseur de chocs hydraulique selon la revendication 3, caractérisé en ce que ladite soupape de régulation de passage d'huile principal comprend une soupape champignon préchargée par ressort (82) présentant une partie formant manchon (100) faisant face à et définissant partiellement ladite sous-chambre à huile (104), une partie formant soupape champignon (83) définissant ledit passage d'huile pilote secondaire (112) qui relie la chambre à huile principale adjacente (16) à la sous-chambre à huile (104), et une section plate à soupape (96) faisant intégralement corps avec la partie formant manchon (100) pour réguler une ouverture de soupape définie par une partie inférieure (92) en anneau du passage d'huile principal (81), ladite ouverture de soupape (88) établissant ou bloquant la connexion entre la chambre à huile principale associée (16) et le passage d'huile principal (84) en réponse à la position de la soupape champignon (82).

5. Amortisseur de chocs hydraulique selon la revendication 4, caractérisé en ce que ladite section plate de soupape (96) présente à peu près le même diamètre que l'ouverture de soupape (88) mais comprend une pluralité de dents (102) qui se projettent radialement de la circonférence de la section plate de soupape (96) pour venir en contact bout à bout avec un épaulement de la partie inférieure (92) en anneau du carter à passage d'huile principal (81) depuis une position plus élevée.

6. Amortisseur de chocs hydraulique selon les revendications 2 ou 5, caractérisé en ce que ladite soupape champignon (82) définit un orifice (114) entre le passage d'huile principal (84) et la sous-chambre à huile (104).

7. Amortisseur de chocs hydraulique selon l'une au moins des revendications précédentes 2 à 6, caractérisé en ce que ledit carter à passage d'huile principal (81) comprend un troisième passage pilote (120) en parallèle avec le second passage pilote (112) pour relier le premier passage pilote (44) de l'ensemble soupape pilote (40) à la chambre à huile principale (16) adjacente à la soupape champignon (82).

8. Amortisseur de chocs hydraulique selon l'une au moins des revendications précédentes 2 à 7, caractérisé en ce que le clapet antiretour régulant la communication d'alimentation entre le premier passage pilote (44) et la chambre à huile principale (14) distante de la soupape champignon (82) est du type clapet à bille.

9. Amortisseur de chocs hydraulique selon la revendication 4, caractérisé en ce que ladite partie formant manchon (96) de la soupape champignon (82) est montée coulissante dans une chambre d'isolation de soupape champignon (90) et comprend une rainure annulaire (98) faisant face à l'intérieur du passage d'huile principal (84), ladite partie soupape champignon (83) comprenant une section conique (94) de guidage du flux exposée à la chambre à huile principale (16) adjacente à la soupape champignon (82).

10. Amortisseur de chocs hydraulique selon l'une au moins des revendications 1 à 9, caractérisé en ce que le carter du piston (18) comprend un anneau d'étanchéité circonférentiel proche de l'extrémité ouverte du carter du cylindre (18) qui est en contact d'étanchéité avec la paroi intérieure du cylindre (10).

Fig. 1

Fig. 2

Fig. 3

Fig. 4

Fig. 5